(19) Europäisches Patentamt
European Patent Office
Office européen des brevets

(11) **EP 4 300 264 B1**

(12) **EUROPEAN PATENT SPECIFICATION**

(45) Date of publication and mention
of the grant of the patent:
**17.12.2025 Bulletin 2025/51**

(21) Application number: **22305976.7**

(22) Date of filing: **01.07.2022**

(51) International Patent Classification (IPC):
*G06F 3/01* *(2006.01)*

(52) Cooperative Patent Classification (CPC):
**G06F 3/011; G06F 3/016**

(54) **METHOD AND APPARATUS OF SIGNALING/PARSING HAPTIC DATA**

VERFAHREN UND GERÄT ZUM SIGNALISIEREN/PARSEN VON HAPTISCHEN DATEN

PROCÉDÉ ET APPAREIL DE SIGNALISATION/D'ANALYSE DE DONNÉES HAPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2024 Bulletin 2024/01**

(73) Proprietor: **WYVRN**
**59800 Lille (FR)**

(72) Inventors:
• **VEZZOLI, Eric**
**75016 PARIS (FR)**
• **HULSKEN, Alexandre**
**59000 LILLE (FR)**

(74) Representative: **RVDB**
**87, rue Nationale**
**59000 Lille (FR)**

(56) References cited:
**WO-A1-2022/053439      US-A1- 2016 012 690
US-A1- 2018 250 590      US-A1- 2019 139 020**

• **NICOLAS MOLLET ET AL: "A WORKFLOW FOR
NEXT GENERATION IMMERSIVE CONTENT", IBC
2015 CONFERENCE, 11-15 SEPTEMBER 2015,
AMSTERDAM,, 11 September 2015 (2015-09-11),
XP030082577**

**Description**

FIELD

The present application, i.e., specification, generally relates to the field of haptic and, in particular, to the processing of haptic related data. The present application relates to the representation and/or signaling of data related to the mapping between a body part of a body model and a haptic device configured to render haptic effect(s), and to the parsing of such data. The present application also related to methods and apparatus of encoding/decoding data representative of a haptic device configured to render a haptic device on body part(s) of a person.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents. Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using haptic device, a haptic device corresponding to an arrangement of one or more haptic actuators. For example, vibrotactile effects might be obtained with the use of haptic devices such as ERMs (Eccentric Rotating Mass), LRAs (Linear Resonant Actuators), and large bandwidth actuators like VCM (Voice Coil Motors), or PZT (Piezoelectric Actuators). Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

There is a large range of haptic devices with various arrangements of the actuator(s) forming the haptic device. When aggregating haptic related data in a container to be transmitted to a haptic rendering engine for rendering a haptic effect on a human body, it is generally not known the type of haptic device that will be used to render the haptic effect on the human body, which may lead to erroneous rendering of the haptic effect by the rendering engine and associated haptic device(s).

Patent document WO 2022/053439 A1 recites a method for rendering haptic effect, which is described by metadata.

Patent document US 2019/139020 A1 recites systems and methods to generate haptic effects onto one or more body parts through wearable devices according to the receiving or transferring of a digital content.

The article "A workflow for next generation immersive content" by Nicolas MOLLET et al. (DOI: 10.1049/ibc.2015.0033) recites a workflow for immersive content

Patent document US 2016/012690 A1 recites a haptic warping system that transforms a haptic signal into a collection of vibrotactile haptic effect patterns.

SUMMARY

The invention relates to a method of signaling according to claim 1 and a method of parsing according to claim 7, and to corresponding apparatuses according to claims 14 and 15, respectively. The dependent claims define further embodiments of the invention.

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, which is part of the claimed invention, there is provided a method of signaling, into a container, a mapping between a body part of a body model targeted by a haptic effect and a haptic device comprising a set of haptic actuators configured to render the haptic effect on at least a part of the body part, the method comprising:

- writing, into the container, first data representative of the body part;

- writing, into the container, second data representative of a spatial distribution of the set of haptic actuators over the body part in a determined multidimensional space.

In an exemplary embodiment, the method further comprises, when the set of haptic actuators comprises a plurality of haptic actuators, writing, into the container, third data representative of a position of one determined haptic actuator of the set in the determined multidimensional space.

In an exemplary embodiment, the method further comprises writing, into the container, fourth data representative of a distance with respect to the determined haptic actuator, the distance being defined in the determined multidimensional space.

In a further exemplary embodiment, the determined haptic actuator corresponds to a starting point of a haptic animation, the method further comprising writing, into the container, fifth data representative of another determined haptic actuator corresponding to an ending point of the haptic animation.

In another exemplary embodiment, the determined multidimensional space corresponds to:

- a cartesian three-dimensional space, wherein the first data comprises a first information representative of a number of haptic actuators according to a first dimension of the three-dimensional space, a second information representative of a number of haptic actuators according to a second dimension of the three-dimensional space, and a third information representative of a number of haptic actuators according to a third dimension of the three-dimensional space, a maximum number of haptic actuators according to the third information being equal to 2;
- a two-dimensional space, wherein the first data comprises a first information representative of a number of angular sectors according to a first dimension of the two-dimensional space and a second information representative of a number of haptic actuators according to a second dimension of the two-dimensional space for each of the angular sectors.

In a further exemplary embodiment, the method further comprises writing, into the container, data representative of a haptic device type associated with the haptic device, the spatial distribution referring to the haptic device type.

In an additional exemplary embodiment, the method further comprises writing, into the container, sixth data representative of the haptic effect.

According to a second aspect of the present application, which is part of the claimed invention, there is provided a method of parsing, from a container, data representative of a mapping between a a body part of a body model targeted by a haptic effect and a haptic device comprising a set of haptic actuators configured to render the haptic effect on at least a part of the body part, the method comprising:

- reading, from the container, first data representative of the body part;
- reading, from the container, second data representative of a spatial distribution of the set of haptic actuators over the body part in a determined multidimensional space.

In an exemplary embodiment, the method further comprises, when the set of haptic actuators comprises a plurality of haptic actuators, reading, from the container, third data representative of a position of one determined haptic actuator of the set in the determined multidimensional space.

In an exemplary embodiment, the method further comprises reading, from the container, fourth data representative of a distance with respect to the determined haptic actuator, the distance being defined in the determined multidimensional space.

In a further exemplary embodiment, the determined haptic actuator corresponds to a starting point of a haptic animation, the method further comprising reading, from the container, fifth data representative of another determined haptic actuator corresponding to an ending point of the haptic animation.

In another exemplary embodiment, the determined multidimensional space corresponds to:

- a cartesian three-dimensional space, wherein the first data comprises a first information representative of a number of haptic actuators according to a first dimension of the three-dimensional space, a second information representative of a number of haptic actuators according to a second dimension of the three-dimensional space, and a third information representative of a number of haptic actuators according to a third dimension of the three-dimensional space, a maximum number of haptic actuators according to the third information being equal to 2;
- a two-dimensional space, wherein the first data comprises a first information representative of a number of angular sectors according to a first dimension of the two-dimensional space and a second information representative of a number of haptic actuators according to a second dimension of the two-dimensional space for each of the angular sectors.

In a further exemplary embodiment, the method further comprises reading, from the container, data representative of a haptic device type associated with the haptic device, the spatial distribution referring to the haptic device type.

In another exemplary embodiment, the method further comprises converting the third and/or fourth data according to the second data and data representative of a spatial distribution of a set of haptic actuators of another haptic device.

In an additional exemplary embodiment, the method further comprises reading, from the container, sixth data representative of the haptic effect.

According to a third aspect of the present application, which is part of the claimed invention, there is provided an apparatus of signaling, into a container, a mapping between a body part of a body model targeted by a haptic effect and a haptic device comprising a set of haptic actuators configured to render the haptic effect on at least a part of the body part, wherein the apparatus comprises a memory associated with at least a processor configured to implement the method in accordance with the first aspect of the present application.

According to a fourth aspect of the present application, which is part of the claimed invention, there is provided an apparatus of parsing, from a container, data representative of a mapping between a body part of a body model targeted by a haptic effect and a haptic device comprising a set of haptic actuators configured to render the haptic effect on at least a part of the body part, wherein the apparatus comprises a memory associated with at least a processor configured to implement the method in accordance with the second aspect of the present application.

According to a fifth aspect of the present application, there is provided a container formatted to include data representative of a mapping between a body part of a body model targeted by a haptic effect and a haptic device comprising a set of haptic actuators configured to render the haptic effect on at least a part of the body part, the data comprising:

- first data representative of the body part;
- second data representative of a spatial distribution of the set of haptic actuators in a determined multidimensional space.

According to a sixth aspect of the present application, there is provided a bitstream carrying data representative of a mapping between a body part of a body model targeted by a haptic effect and a haptic device comprising a set of haptic actuators configured to render the haptic effect on at least a part of the body part, the data comprising:

- first data representative of the body part;
- second data representative of a spatial distribution of the set of haptic actuators in a determined multidimensional space.

According to a seventh aspect of the present application, there is provided a computer program product including instructions which, when the program is executed by one or more processors, causes the one or more processors to carry out a method according to the first aspect of the present application.

According to a eighth aspect of the present application, there is provided a non-transitory storage medium carrying instructions of program code for executing a method according to the first aspect of the present application.

According to a nineth aspect of the present application, there is provided a computer program product including instructions which, when the program is executed by one or more processors, causes the one or more processors to carry out a method according to the second aspect of the present application.

According to a tenth aspect of the present application, there is provided a non-transitory storage medium carrying instructions of program code for executing a method according to the second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows a schematic representation of the spatial arrangement of haptic actuators of a haptic device in a first multidimensional space, in accordance with at least one exemplary embodiment;

**Figure 2** shows a schematic representation of the spatial arrangement of haptic actuators of a haptic device in a second multidimensional space, in accordance with at least one exemplary embodiment;

**Figure 3** shows a conversion from the spatial arrangement of figure 1 to a spatial arrangement of another haptic device, in accordance with at least one exemplary embodiment;

**Figure 4** shows a schematic representation of a body model, in accordance with at least one exemplary embodiment;

**Figure 5** shows an example of a signaling / parsing scheme or of an encoding / decoding scheme of data representative of the spatial arrangement of figure 1 or 2, in accordance with at least one exemplary embodiment;

**Figure 6** shows two remote devices communicating data representative of the spatial arrangement of figure 1 or 2 over a communication network, in accordance with at least one exemplary embodiment;

**Figure 7** shows an example of a container carrying data representative of the spatial arrangement of figure 1 or 2, in accordance with at least one exemplary embodiment;

**Figure 8** shows a schematic block diagram of step(s) of a method of signaling data representative of a mapping between body part(s) of the body model of figure 4 and a haptic device into a container, in accordance with at least one exemplary embodiment;

**Figure 9** shows a schematic block diagram of step(s) of a method of parsing data representative of a mapping between body part(s) of the body model of figure 4 and a haptic device from a container, in accordance with at least one exemplary embodiment;

**Figure 10** illustrates a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed.

At least one of the aspects generally relates to a method and apparatus of signaling, into a container, information representative of a mapping between a body part of a body model targeted by a haptic effect and a haptic device. The haptic device comprises a set of haptic actuators configured to render the haptic effect on the body part intended to receive the haptic effect.

The body model is for example represented with a skeleton of joints and segments, a mesh or with body parts and groups of body parts comprising one or more body parts and each identified with a specific identifier.

The signaling of the mapping information comprises writing, into the container, first data representative of the body part targeted by the haptic effect, the first data identifying the body part. The signaling further comprises writing, into the container, second data representative of a spatial distribution of the set of haptic actuators of the haptic device over the body part, in a determined multidimensional space, e.g., in a three-dimensional (3D) space or in a two-dimensional (2D) space.

One or more aspects of the present principles further relate to corresponding method and apparatus of parsing the information representative of the mapping between a body part and a haptic device from the container.

Exemplary embodiments of the present principles are directed to a method and apparatus of encoding information of data representative of the mapping between a body part and a haptic device into a container; and to corresponding method and apparatus of decoding information of data representative of the mapping between a body part and a haptic device from a container.

In brief, the present invention relates to the signaling/parsing and/or to the encoding/decoding of haptic related data to enable the rendering of one or more haptic effects by a haptic device arranged on a human body, i.e., on at least a part of the human body. The haptic related data may correspond to data representative of part(s) of a body model representing the human body onto which the haptic effect is to be applied and to data representative of the haptic device, and more specifically to the arrangement of actuators forming the haptic device.

The use of the second data indicating how the actuator(s) forming the haptic device is(are) spatially arranged or distributed (over the body part targeted by the haptic effect) enables the haptic rendering engine receiving the second data to optimize the rendering of the haptic effect.

The receiving of the second data may also enable the haptic rendering engine to determine the type of the haptic device signaled with the second data (and for which the parameters defining the haptic effect to be rendered have bene for example computed) and to adapt/convert the parameters of the haptic effect according to the haptic device available at rendering stage (which may be different from the haptic device signaled in the container).

A container may for example correspond to a bitstream, a network packet or a file, e.g., a text file or a binary file.

Binary structures such as binary files (e.g., ISOBMFF files) are one instantiation of a container. Binary files define the syntax for parsing and understanding the structures of files. They have a start and an end and typically holds self-contained information. Binary files are generally transported and stored as a whole.

However, binary files may be further segmented into smaller file units, e.g., transport packets, for the purpose of transmission over a network such as using SCTP (Synchronous Collaboration Transport Protocol), IRTP (Interactive Real-Time Protocol), ETP (Efficient Transport Protocol), RTNP (Real Time Network Protocol) or RTP/I (Real Time application-level Protocol for distributed Interactive media).

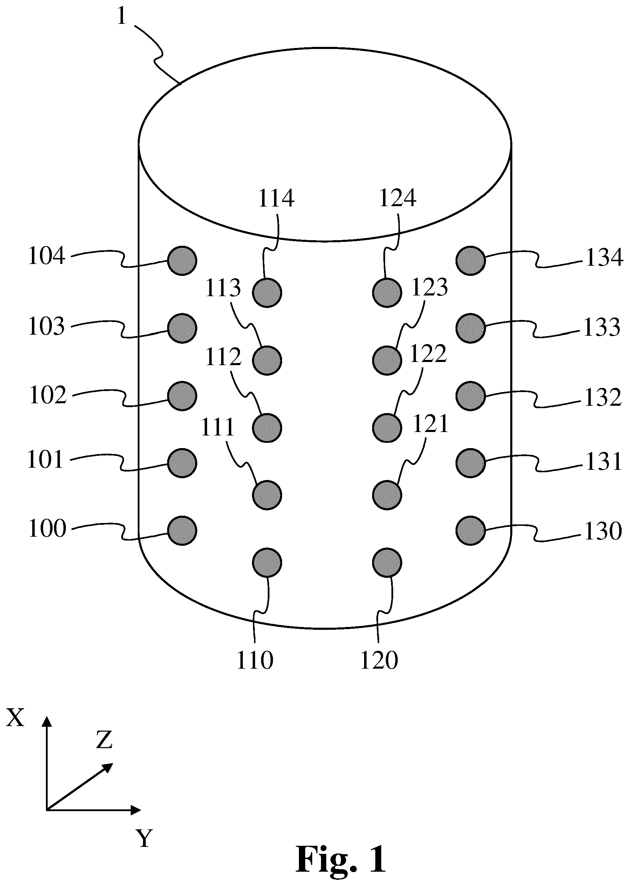

**Figure 1** illustrates a schematic representation of the arrangement of a set of actuators of a haptic device on a body part 1 in a first multidimensional space, in accordance with at least one exemplary embodiment.

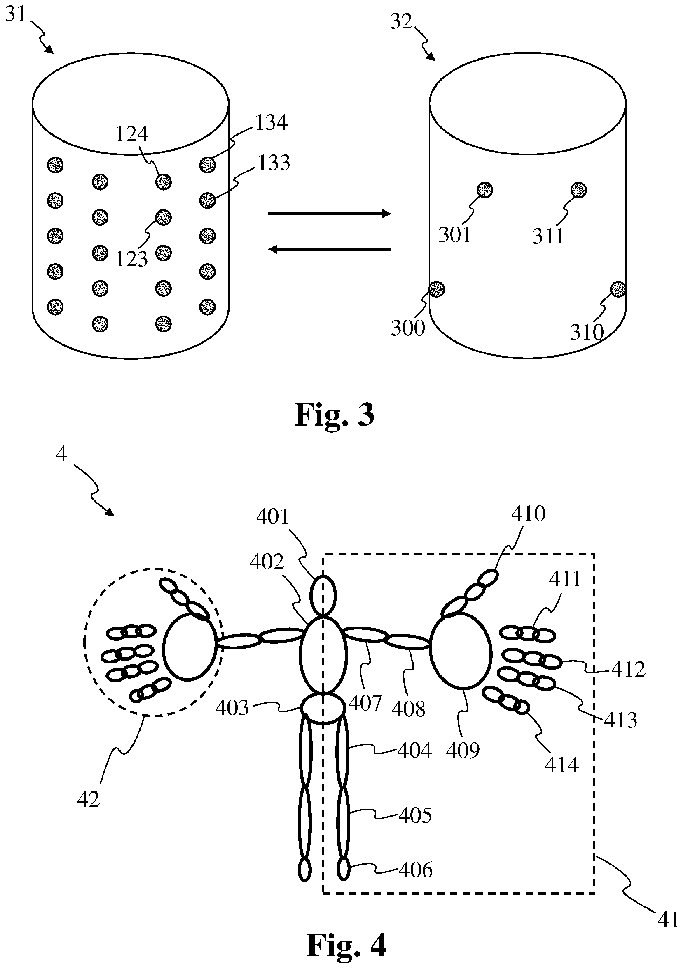

The body part 1 corresponds to an element of a body model, for example the body model described with regard to figure 4.

A body model represents a human body and is used for identifying various parts of the human body.

The body part 1 corresponds for example to a torso, a part of an arm or of a leg.

The body part 1 is represented with a cylinder on figure 1, only the front face of the cylinder being visible. Naturally, the form of the body part is not limited to a cylinder but may be any form.

The haptic device associated with the body part comprises 40 haptic actuators according to the non-limitative example of figure 1, only 20 haptic actuators 100 to 104, 110 to 114, 120 to 124 and 130 to 134 being visible on figure 1.

20 haptic actuators of the haptic device of figure 1 are associated with the front face of the body part 1 and 20 haptic actuators (not represented) of the haptic device are associated with the back (or rear) face of the body part 1.

According to the example of figure 1, the spatial distribution of the haptic actuators is signaled into the container (that is intended to be transmitted to a decoder and/or haptic rendering engine) with respect to a cartesian 3D space (X, Y, Z), that may for example be associated with the body part 1 or with the body model the body part 1 belongs to.

The spatial distribution is for example signaled under the form of a vector (represented with $[N_x, N_y, N_z]$) with:

- a first information (first element '$N_x$' of the vector) representing a number of haptic actuators according to the first dimension (according to the X-axis, which represents for example the longitudinal axis) of the 3D space; $N_x$ may be seen as the resolution of the haptic actuators according to the first dimension, i.e., the number of haptic actuators per haptic device according to the first dimension;
- a second information (second element '$N_y$' of the vector) representing a number of haptic actuators according to the second dimension (according to the Y-axis, which represents for example the transversal axis) of the 3D space; $N_y$ may be seen as the resolution of the haptic actuators according to the second dimension, i.e., the number of haptic actuators per haptic device according to the second dimension; and
- a third information (third element '$N_z$' of the vector) representing a number of haptic actuators according to the third dimension (according to the Z-axis, which represents for example the depth axis) of the 3D space; $N_z$ may be seen as the resolution of the haptic actuators according to the third dimension, i.e., the number of haptic actuators per haptic device according to the third.

An information representative of the maximal resolution of the haptic device (i.e., the total amount of haptic actuators per haptic device) may be obtained from the second data with: $N_x * N_y * N_z$.

The spatial distribution of the haptic actuators of the haptic device may be signaled or encoded as follows: [5,4,2] with 5 haptic actuators according to the X axis, 4 haptic actuators according to the Y axis and 2 haptic actuators according to the Z axis for a total amount of 40 haptic actuators (5*4*2).

For each face of the body part, the haptic actuators are arranged according to 4 columns and 5 lines.

The first column (on the left-hand side) comprises 5 haptic actuators 100, 101, 102, 103 and 104. The second column, on the right of the first column, comprises 5 haptic actuators 110, 111, 112, 113 and 114. The third column, on the right of the second column, comprises 5 haptic actuators 120, 121, 122, 123 and 124. The fourth column, on the right of the third column, comprises 5 haptic actuators 130, 131, 132, 133 and 134.

The haptic devices are arranged according to a matrix on each side of the body parts, the matrix comprising 5 lines and 4 columns.

According to another example, the spatial distribution for a haptic device comprising a single actuator is signaled or encoded with: [1,1,1].

According to a specific and non-limiting embodiment, the third element 'N$_z$' of the vector [N$_x$,N$_y$,N$_z$] is less or equal to 2, i.e., N$_z$ = 1 or N$_z$ = 2. According to this embodiment, the maximal number of layers of actuators according to the Z axis (depth) is equal to 2, with a first layer corresponding to the front face and a second layer corresponding to the back face of the body part (or of the haptic device).

The signaling / encoding of the spatial distribution as explained hereinabove enables for example a decoder and/or haptic rendering engine receiving the container to obtain information about the haptic device enabling the identification of the haptic device, through its specific spatial distribution of haptic actuator(s).

In addition, the signaling / encoding of the spatial distribution as explained hereinabove enables the decoder and/or haptic rendering engine receiving the container to adapt a haptic effect to be rendered by the haptic device to the specific spatial distribution of haptic actuator(s) signaled in the container.

According to a particular embodiment, third data representative of a position of a specific haptic actuator of the set of haptic actuators of the haptic device is added into the container in addition to the second data.

The addition of third data is for example added into the container when the haptic device comprises a plurality of actuators (e.g., when the spatial distribution being signaled / encoded with data different from [1,1,1]) and/or when only a part of the haptic actuators of the haptic device is used to render the haptic effect.

The location or position of the specific haptic actuator is for example signaled or encoded under the form of a vector (represented with [C$_x$,C$_y$,C$_z$]) with:

- a first information (first element 'C$_x$' of the vector) representing the index of the line the specific haptic actuator belongs to, i.e., according to the first dimension (according to the X-axis) of the 3D space;
- a second information (second element 'C$_y$' of the vector) representing the index of the column the specific haptic actuator belongs to, i.e., according to the second dimension (according to the Y-axis) of the 3D space; and
- a third information (third element 'C$_z$' of the vector) representing the index of the face (front or back) the haptic actuator belongs to, i.e., according to the third dimension (according to the Z-axis) of the 3D space.

For example, for identifying the haptic actuator referenced 123 on figure 1, the third information corresponds to: [3,2,0]; for identifying the haptic actuator referenced 111 on figure 1, the third information corresponds to: [1,1,0]; and for identifying the haptic actuator located at the same position as the haptic actuator but on the back/rear face, the third information corresponds to: [3,2,1].

Therefore, the signaling of the spatial distribution of the haptic device with the identifying of a specific haptic actuator (e.g., haptic actuator 123), the signaling / encoding of the information corresponds to: [5,4,2][3,2,0].

According to another particular embodiment, fourth data representative of a distance with respect to the specific haptic actuator identified through the third data is added into the container in addition to the third data. The distance is defined in the 3D space.

The addition of a distance enables to identify a group of haptic actuators in the set of haptic actuators forming the haptic device, for example when the haptic effect is to be rendered by the group of haptic actuators.

The addition of the fourth data enable to optimize the encoding of the information by minimizing the amount of data used to signal / encode this information. The use of a distance expressed in the 3D space is more efficient than identifying separately each haptic actuator of the group via third data as explained hereinabove for the specific haptic actuator.

The distance with regard to the specific haptic actuator is for example signaled or encoded under the form of a vector (represented with [R$_x$,R$_y$,R$_z$]) with:

- a first information (first element 'R$_x$' of the vector) representing a number of selected haptic actuators departing from the specific haptic actuators according to the first dimension (according to the X-axis) of the 3D space;
- a second information (second element 'R$_y$' of the vector) representing a number of selected haptic actuators departing from the specific haptic actuators according to the second dimension (according to the Y-axis) of the 3D space; and
- a third information (third element 'R$_z$' of the vector) representing a number of selected haptic actuators departing from the specific haptic actuators according to the third dimension (according to the Z-axis) of the 3D space.

For example, to identify a group of haptic actuators comprising the haptic actuators 122, 123 and 124 by using the third information identifying the specific haptic actuators 123, the distance may be signaled or encoded with: [1,0,0].

Thus, if [C$_x$,C$_y$,C$_z$] corresponds to the third data identifying the position of the specific haptic actuators and [R$_x$,R$_y$,R$_z$] corresponds to the fourth data defining the distance, the group of haptic actuators rendering the haptic effect will comprise each haptic actuators having a position [P$_x$,P$_y$,P$_z$] verifying:

$$C_x - R_x \leq P_x \leq C_x + R_x;$$

and

$$C_y - R_y \leq P_y \leq C_y + R_y;$$

and

$$C_z - R_z \leq P_z \leq C_z + R_z$$

According to a further embodiment, data representative of a haptic animation is signaled and/or encoded into the container.

A haptic animation corresponds to a haptic effect, or a sequence of haptic effects, rendered via a plurality of haptic actuators according to a path. The path is for example defined with a starting or initial point and with an ending or final point.

A haptic animation may correspond to a haptic effect or to a sequence of haptic effects spreading across one or more parts of the body of the user receiving this (these) haptic effect(s) and rendered through a sequence of haptic actuators arranged onto the one or more part of the user's body.

The starting point corresponds for example to a first specific haptic actuator or to a first group of haptic actuators. The ending point corresponds for example to a second specific haptic actuator or to a second group of haptic actuators. The first haptic actuator and the second haptic actuator belong for example to a same haptic device or to two different haptic devices.

The first specific haptic actuator (or first group of haptic devices) is advantageously signaled into the container as explained hereinabove, using the second data and optionally the third and fourth data.

The second specific haptic actuator (or second group of haptic devices) is advantageously signaled into the container as explained hereinabove, using the second data and optionally the third and fourth data.

The haptic rendering engine receiving the contained parses the data comprised into the container to read the data representative of the haptic animation, specifically the data representative of the starting and ending points, i.e., the first and second haptic actuator.

From the first and second haptic actuator, the rendering engine determines or computes a path of haptic actuators, starting with the first haptic actuator and ending with the second haptic actuator. The path comprises a plurality of haptic actuators, belonging to one or several haptic devices arranged on different parts of the body of the user receiving the haptic effect.

The path is further determined according to the haptic effect to be rendered, for example according to the duration of the haptic effect, according to the amplitude of the haptic effect at the starting point and to the amplitude of the haptic effect at the ending point.

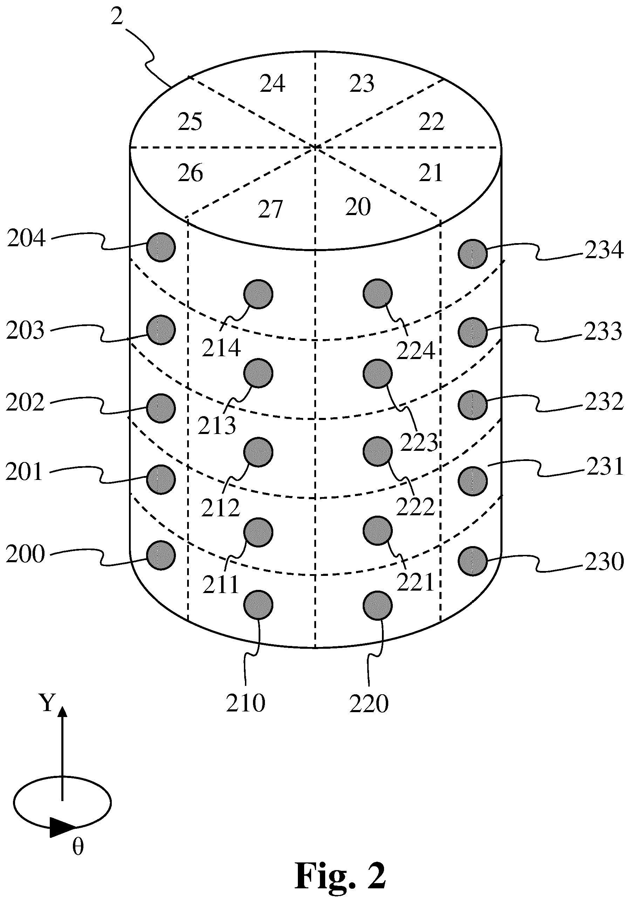

**Figure 2** illustrates a schematic representation of the arrangement of a set of actuators of a haptic device on a body part 2 in a second multidimensional space, in accordance with at least one exemplary embodiment.

The body part 2 is similar to the body part of figure 1, as well the haptic device associated with this body part 2.

The haptic device associated with the body part 2 comprises 40 haptic actuators according to the non-limitative example of figure 2, only 20 haptic actuators 200 to 204, 210 to 214, 220 to 224 and 230 to 234 being visible on figure 2.

According to the example of figure 2, the spatial distribution of the haptic actuators is signaled into the container (that is intended to be transmitted to a decoder and/or haptic rendering engine) with respect to a 2D space ($\theta$, Y), that may for example be associated with the body part 2 or with the body model the body part 2 belongs to. The 2D space may for example be assimilated to a polar 2D space.

The spatial distribution is for example signaled under the form of a vector (represented with $[N_\theta, N_Y]$) with:

- a first information (first element '$N_\theta$' of the vector) representing the number of angular sectors according to which the body part is segmented or divided according to a first dimension of the 2D space; and
- a second information (second element '$N_y$' of the vector) representing a number of haptic actuators according to the second dimension (according to the longitudinal axis of the angular sectors for example) of the 2D space.

The spatial distribution of the haptic actuators of the haptic device according to the example of figure 2 may be signaled or encoded as follows: [8,5] with 8 angular sectors 20 to 27 and 5 and 5 haptic actuators according to the longitudinal axis for each angular sector, for a total amount of 40 haptic actuators (8*5).

According to the example of figure 2, only the haptic actuators of angular sectors 26, 27, 20 and 21 are visible, corresponding to the front face of the body part 2.

According to a particular embodiment, third data representative of a position of a specific haptic actuator of the set of haptic actuators of the haptic device is added into the container in addition to the second data representative of the spatial distribution of the haptic devices 200 to 204, 210 to 214, 220 to 224 and 230 to 234.

The addition of third data is for example added into the container when the haptic device comprises a plurality of actuators and/or when only a part of the haptic actuators of the haptic device is used to render the haptic effect.

The location or position of the specific haptic actuator is for example signaled or encoded under the form of a vector (represented with $[C_\theta, C_Y]$) with:

- a first information (first element '$C_\theta$' of the vector) representing the index of the angular sector the specific haptic actuator belongs to; and
- a second information (second element '$C_Y$' of the vector) representing the index of the specific haptic actuator in the angular sector identified with the first information, the index of the actuators in a given angular sector starting with 0 (for example for the actuator at the bottom), the second information referring to the second dimension of the 2D space.

For example, for identifying the haptic actuator referenced 223 on figure 2, the third information corresponds to: [0,3], the angular sector 20 corresponding to the reference angular sector with index 0, the angular sector 21 having index 1 and so on until angular sector 27 with index 7; and for identifying the haptic actuator referenced 211 on figure 2, the third information corresponds to: [7,1].

Therefore, the signaling of the spatial distribution of the haptic device with the identifying of a specific haptic actuator (e.g., haptic actuator 123), the signaling / encoding of the information corresponds to: [8,5][0,3].

According to another particular embodiment, fourth data representative of a distance with respect to the specific haptic actuator identified through the third data is added into the container in addition to the third data. The distance is defined in the 2D space.

The addition of a distance enables to identify a group of haptic actuators in the set of haptic actuators forming the haptic device, for example when the haptic effect is to be rendered by the group of haptic actuators.

The distance with regard to the specific haptic actuator is for example signaled or encoded under the form of a vector (represented with $[R_\theta, R_Y]$) with:

- a first information (first element '$R_\theta$' of the vector) representing a number of angular sectors to select around the reference angular sector, according to the first dimension of the 2D space; and
- a second information (second element '$R_Y$' of the vector) representing a number of selected haptic actuators departing from the specific haptic actuators according to the second dimension of the 2D space.

For example, to identify a group of haptic actuators comprising the haptic actuators 222, 223 and 224 by using the third information identifying the specific haptic actuators 223, the distance may be signaled or encoded with: [0,1].

Thus, if $[C_\theta, C_Y]$ corresponds to the third data identifying the position of the specific haptic actuators and $[R_\theta, R_Y]$ corresponds to the fourth data defining the distance, the group of haptic actuators rendering the haptic effect will comprise each haptic actuators having a position $[P_\theta, P_Y]$ verifying:

$$C_\theta - R_\theta \leq P_\theta \leq C_\theta + R_\theta;$$

and

$$C_Y - R_Y \leq P_Y \leq C_Y + R_Y$$

**Figure 3** illustrates a schematic representation of a conversion of data representative of the spatial distribution of haptic actuators of a first haptic device to data representative of the spatial distribution of haptic actuators of a second haptic device, in accordance with at least one exemplary embodiment.

Figure 3 shows, on the left-hand side, the spatial distribution 31 of haptic actuators of a first haptic device and, on the right-hand side, the spatial distribution 32 of haptic actuators of a second haptic device that is different from the first haptic device.

The haptic actuators of the first haptic device and of the second haptic device are associated with or arranged on a same body part.

The spatial distribution 31 of the first haptic device is for example defined in the 3D space with the following second data: $[N1_x, N1_y, N1_z]$.

The spatial distribution 32 of the second haptic device is for example defined in the 3D space with the following second data: $[N2_x, N2_y, N2_z]$.

The first haptic device corresponds for example to the haptic device described with regard to figure 1, which comprises 40 haptic actuators with a spatial distribution defined with [5,4,2].

The second haptic device comprises 6 haptic actuators, with 2 haptic actuators 301, 311 being arranged on the upper part of the front face, 2 haptic actuators (not represented on figure 3) being arranged on the upper part of the back face and 2 haptic actuators 300, 310 located on the sides of the body part.

The second haptic device comprises 6 haptic actuators with a spatial distribution defined with [2,2,2].

A container received by a haptic rendering engine or a decoder may comprise following data or information:

- second data representative of the spatial distribution of the first haptic device, i.e., $[N1_x, N1_y, N1_z]$;
- third data representative of a determined haptic actuators of the set of haptic actuators of the first haptic device, i.e., $[C1_x, C1_y, C1_z]$; and
- fourth data representative of a distance, i.e., $[R1_x, R1_y, R1_z]$.

When the second haptic device associated with the haptic rendering engine to render the haptic effect is different from the first haptic device signaled into the container, the haptic rendering engine converts the third and fourth data to determine which haptic actuator(s) of the second haptic device correspond to the haptic actuators of the first haptic device identified with the third and fourth data.

To reach that aim, the haptic rendering engine converts the third and fourth data comprised in the container in corresponding data representative of a determined haptic actuator (noted $[C2_x, C2_y, C2_z]$) of the second haptic device and data representative of a distance (noted $[R1_x, R1_y, R1_z]$) for the second haptic device.

The parameters $C2_x$, $C2_y$ and $C2_z$ are for example obtained through the following equations, the haptic rendering engine knowing $N2_x$, $N2_y$ and $N2_z$ (these parameters being for example stored in a memory of the haptic rendering engine or retrieved from the second haptic device that is connected to the haptic rendering engine) and the haptic rendering engine retrieving from the received container $N1_x$, $N1_y$ and $N1_z$, $C1_x$, $C1_y$ and $C1_z$, and $R1_x$, $R1_y$ and $R1_z$:

$$C2_x = \left\lfloor \left( \frac{(C1_x+1)N2_x}{N1_x} - 1 \right) \right. \qquad \text{Equation 1}$$

$$C2_y = \left\lfloor \left( \frac{(C1_y+1)N2_y}{N1_y} - 1 \right) \right. \qquad \text{Equation 2}$$

$$C2_z = \left\lfloor \left( \frac{(C1_z+1)N2_z}{N1_z} - 1 \right) \right. \qquad \text{Equation 3}$$

$$R2_x = \left\lfloor \frac{N2_x}{N1_x} - 1 \right. \qquad \text{Equation 4}$$

$$R2_y = \left\lfloor \frac{N2_y}{N1_y} - 1 \right. \qquad \text{Equation 5}$$

$$R2_z = \left\lfloor \frac{N2_z}{N1_z} - 1 \right. \qquad \text{Equation 6}$$

Applying the Equations 1 to 6 to the non-limiting example of figure 3 with $[N1_x, N1_y, N1_z] = [5,4,2]$, $[C1_x, C1_y, C1_z] = [3,2,0]$ (haptic actuator 123), $[R1_x, R1_y, R1_z] = [1,1,0]$ and $[N2_x, N2_y, N2_z] = [2,2,2]$, it is obtained: $[C2_x, C2_y, C2_z] = [1,1,0]$ (haptic actuator 311) and $[R2_x, R2_y, R2_z] = [0,0,0]$.

The equations 1 to 6 are for example stored in a memory of the haptic rendering engine. According to a variant, the equations 1 to 6 are encoded into the contained and transmitted with the first, second, third and fourth data.

Naturally, the equations used for computing the conversion depend on the multidimensional space used to represent the second, third and fourth data.

**Figure 4** illustrates a schematic representation of a body model 4 in accordance with at least one exemplary embodiment.

The body model 4 of figure 4 represents a human body and is used for identifying various parts of the human body.

The body model 4 comprises a first set of body parts and a second set of groups of body parts. Each body part of the first set belongs to one or more groups of the second set and each group of the second set comprises one or more body parts of the second set.

A body part of the first set may for example correspond to a group of the second set.

For example, the second set of groups of body parts comprises the following groups:

- a group called "Head" 401 and comprising the following body parts: Hand and Neck;
- a group called "Torso" 402 and comprising only one body part, the torso;
- a group called "Waist" 403 and comprising only one body part, the waist;
- a group called "Leg" and comprising the following body parts: Upper 404, Lower 405 and Foot 406;
- a group called "Arm" and comprising the following body parts: Upper 407, Lower 408 and Hand 409;
- a group called "Hand" 42 and comprising the following body parts: Palm 409 and Fingers 410 to 414;
- a group called "Fingers" and comprising the following body parts: Thumb 4101, Index 411, Middle 412, Ring 413 and Pinky 415;
- a group called "Phalanx" and comprising the following body parts: First, Second and Third;
- a group called "Foot" and comprising the following body parts: Plant and Fingers;
- a group called "Down", corresponding to the lower part of the body model, and comprising the following body parts: Waist and Leg;
- a group called "Up", corresponding to the upper part of the body model 40, and comprising the following body parts: Head, Chest and Arm;
- a group called "Right", corresponding to the right half of the body model 40, and comprising the following body parts: Head, Chest, Waist, Right Arm and Right Leg;
- a group called "Left" 41, corresponding to the left half of the body model 4, and comprising the following body parts: Head, Chest, Waist, Left Arm and Left Leg;
- a group called "Front", corresponding to the front face of the body model 4, and comprising the following body parts: Front Head, Front Chest, Front Waist, Front Arm and Front Leg;
- a group called "Back", corresponding to the back face of the body model 4, and comprising the following body parts: Back Head, Back Chest, Back Waist, Back Arm and Back Leg; and
- a group called "All" corresponding to the whole body model 4 and gathering all groups and body parts, i.e.: Head, Chest, Waist, Arm and Leg.

Naturally, the groups and body parts forming the body model are not limited to the hereinabove example. The number of groups and the number of body parts are also not limited to the hereinabove example and may be any number.

Each group of body parts may be identified with an identifier corresponding for example to a syntax element, for example one of the following syntax elements: "All", "Left", "Right", "Front", "Back", "Up", "Down", "Head", "Torso", "Waist", "Leg", "Arm", "Hand", "Foot", "Fingers".

In a same way, each body part may be identifier with an identifier corresponding for example to a syntax element that may be identical to a syntax element identifying a group when the body part also corresponds to a group. For example, the following syntax elements may be used to identify a body part when needed: "Head", "Torso", "Waist", "Leg", "Arm", "Hand", "Foot", "Fingers", "Thumb", "Index", "Middle", "Ring", "Pinky", "Palm", "Plant", "Phalanx", "First", "Second", "Third", "Upper", "Lower".

According to a variant, each body part and each group may be identified with an identifier corresponding to a value, for example a binary value or a hexadecimal value.

The identifier(s) of one or more groups is(are) used for signaling, i.e., indicating, via the first data in the container, which body part(s) is(are) targeted by a haptic effect. When necessary, the identifier(s) of the targeted body part(s) is(are) used in addition to the identifier(s) of the one or more groups to signal the targeted body part(s).

To signal or encode data representative of one or more body parts (called targeted body part) in a container comprising information to be transmitted for example from a transmitter to a receiver, from a haptic data generator to a haptic rendering engine or from an encoder to a decoder, first data identifying the targeted body part with reference to the groups comprising the targeted body part may be written or encoded into the container.

For example, wherein the targeted body part corresponds to the third phalanx of each finger 410 to 414 for both hands, first data used to signal the information may correspond to: "Hand Third Phalanx"

According to another example, to signal the 3 phalanxes of the thumb of left hand, first data used to signal the information may correspond to: "Left Hand Thumb"

According to another example, to identify the third phalanx of the thumb of the right hand, first data used to signal this information may correspond to: "Right Hand Thumb Third" or "Right Hand Thumb Phalanx Third" depending on how body parts are grouped in the body model 4.

The use of groups of body parts, taking advantage of the symmetry of the body model 4 (Right/Left and Front/Back) enables to identify clearly and unambiguously each body part of the body model that may be targeted by a haptic effect.

Moreover, the use of groups of body parts enable to encode or signal efficiently the information identifying the targeted body part, especially when the targeted body part encompasses a plurality of body parts of the same type (e.g., phalanxes, both hands, same parts of the legs), the amount of data used to encode or signal the information being reduced.

According to a specific embodiment, the signaling of a targeted body part localized on a specific side of the body model 4, i.e., on the left-hand side or on the right-hand side, is obtained by writing into the container data identifying the side, i.e., Left or Right by referring to the groups of body parts "Left" and "Right".

According to a further specific embodiment, the signaling of a targeted body part localized on a specific face of the body model, i.e., on the front face or on the back (or rear) face, is obtained by writing into the container data identifying the face, i.e., Front or Back by referring to the groups of body parts "Front" and "Back".

According to a further specific embodiment, the first data used to signal the targeted body part (or to encode the data identifying the targeted body part) comprises a first identifier (for example the syntax element describing the targeted body part) identifying the targeted body part and a second identifier identifying the the one or more groups comprising the targeted body part (for example the syntax element(s) describing the one or more groups comprising the targeted body part).

According to another specific embodiment, the first data comprises a third identifier identifying a logical operator. The logical operator corresponds for example to:

- the logical operator NOT; and/or
- the logical operator AND; and/or
- the logical operator OR; and/or
- the logical operator XOR; and/or
- the logical operator NOR.

For example, the upper and lower parts of an arm or both arms may be signaled and/or encoded into the container with the following first data:

"Left Arm NOT Hand" or the left arm, and

"Arm NOT Hand" for both arms.

The use of the logical operator NOT enables to exclude one or more body parts of a group. The exclusion is signaled using the identifier of the logical operator NOT and the identifier of the excluded body part. In the abovementioned example, the body part or group "Hand" is excluded from the group "Arm" to signal and/or encode the identification of lower and upper parts of an arm.

Another way to signal the information would be: "Arm Upper AND Lower".

The use of a logical operator may be more efficient than identifying each targeted body part individually. For example, to identify all the hand but the first phalanx of each finger, the following first data may be used to signal and/or encode the information into the container: "Hand NOT First Phalanx".

The different embodiments described hereinabove may be combined with each other according to any combination.

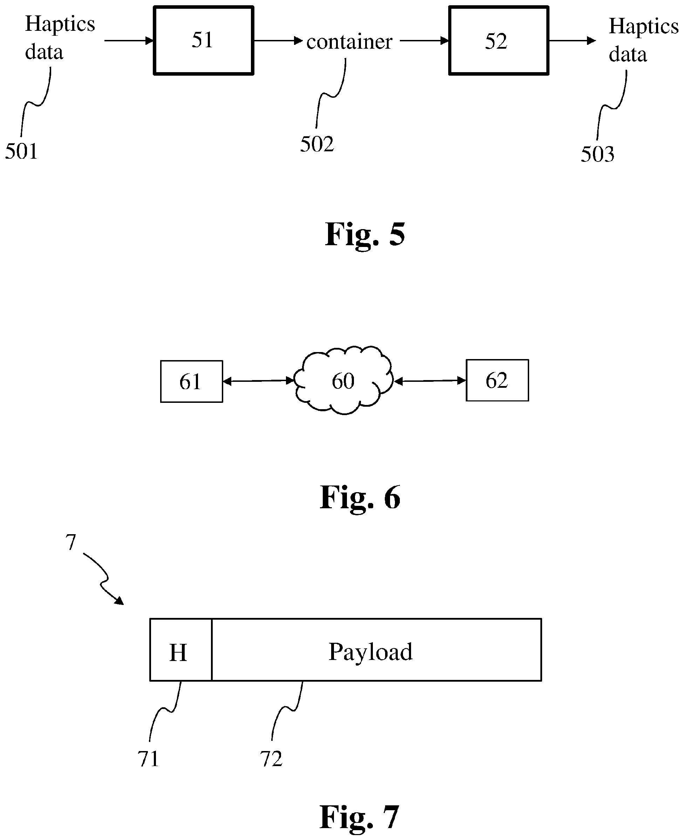

**Figure 5** shows schematically a diagram of a signaling / parsing and/or of an encoding / decoding scheme of haptic related data, according to a particular embodiment of the present principles.

The haptic related data 501 advantageously comprises the first data identifying the targeted body part and the second data representative of spatial distribution, in a determined multidimensional space, e.g., the 3D space of figure 1 or the 2D space of figure 2, of the set of haptic actuators forming the haptic device intended to render the haptic effect. The haptic device, the spatial distribution of which is encoded into the container 502, may be called reference haptic device.

According to a variant, the haptic related data 501 further comprises third data representative of a position of one determined haptic actuator of the set in the determined multidimensional space.

According to another variant, the haptic related data 501 further comprises fourth data representative of a distance with respect to the determined haptic actuator represented with the third data, the distance being defined in the determined multidimensional space.

According to an additional variant, the haptic related data 501 further comprises data representative of the haptic effect to be rendered by a haptic device on the targeted body part. The data representative of the haptic effect to be applied on the targeted body part comprises for example:

- the type of the haptic (and/or sensorial) effect (e.g., vibrotactile effects, force effects, stiffness effects, texture effects, temperature effects, wind effects, pain effects, olfactive effects, light-based effects, etc.); and/or
- the amplitude, phase and/or frequency of signal(s) representing the haptic effect; and/or
- the starting time of the haptic effect; and/or
- the duration of the haptic effect; and/or
- an identifier of the haptic effect that is usable by the system receiving the data to retrieve, for example from a memory of the system, parameters of the haptic effect.

The haptic-related data 501 is signaled and/or encoded into a container under the form of encoded data, the container corresponding for example to a file, a bitstream, data packets, data frame(s), via a signaling process and/or encoding process 51 in a module.

The container 502 is transmitted to a module that implements a parsing and/or decoding process 52 to parse, read and/or decode the encoded data comprised in the container 502 to obtain decoded haptic-related data 503. The modules implementing the signaling/encoding process and the parsing/decoding process may be hardware, software or a combination of hardware and software.

The signaling process 51 comprises writing operation(s) according to which first data identifying the targeted body part is written into the container 502 with second data indicating the spatial distribution of the reference haptic device.

In an encoding process, the writing operations of the signaling process may be interpreted as encoding operations.

The parsing process 52 may for example correspond to the inverse operations of the signaling process 51, wherein information and data comprised in the container 502 is parsed and read to obtain the data and information comprised in the container 502.

In a decoding process, the reading operations of the parsing process may be interpreted as decoding operation to decode the data of the container 502 encoded in the container 502 with the encoding process.

In accordance with an example illustrated in **Figure 6,** in a transmission context between two remote devices 61 and 62 (of the type of the apparatus 10) over a communication network 60, the device 61 comprises means which are configured to implement a method for signaling and/or encoding data as described in relation with the figures 1 to 5 and 8, and the device 62 comprises means which are configured to implement a method of parsing and/or decoding data as described in relation with figures 1 to 5 and 9.

In accordance with an example, the network 60 is a LAN or WLAN network, adapted to broadcast and/or stream haptic related data from device 61 to parsing/decoding/rendering devices including the device 62.

A signal, intended to be transmitted by the device 61, carries the container 7.

**Figure 7** shows an example of a container 7 when the haptic-related data is transmitted over a packet-based transmission protocol. Figure 7 shows an example structure 7 of haptic-related data stream. The structure consists in a container which organizes the stream in independent syntax elements.

The structure may comprise a header part 71 which is a set of data common to every syntax element of the stream. For example, the header part contains metadata about syntax elements, describing the nature and the role of each of them.

The structure may comprise a payload comprising syntax elements 72 identifying the body part targeted by the haptic effect and syntax elements 72 characterizing the reference haptic effect, e.g., the spatial distribution or maximal resolution, the haptic actuator or group of haptic actuators of the haptic device that is/are intended to render the haptic effect.

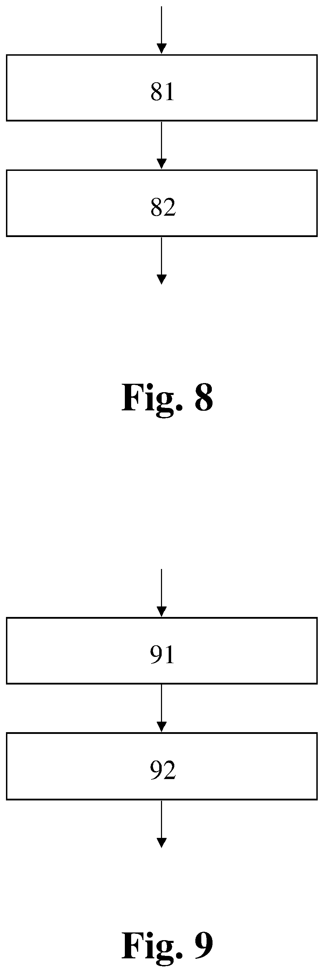

**Figure 8** shows a schematic block diagram of steps of a method of signaling, into a container, a mapping between a body part of a body model targeted by a haptic effect and a haptic device comprising a set of haptic actuators configured to render the haptic effect on at least a part of the body part, in accordance with at least one exemplary embodiment.

The targeted body part is defined in reference to a body model, for example the body model described with regard to figure 4 or according to any representation of a body model known by the skilled person in the art.

Figure 8 also shows a schematic block diagram of steps of a method of encoding data representative of the mapping, according to a specific and non-limiting embodiment. The writing operation(s) described in reference to the signaling method may be interpreted as encoding operation(s) for the encoding method.

In a first step 81, first data representative of the body part is written into the container.

In a second step 82, second data representative of a spatial distribution of the set of haptic actuators (or representative of a maximal resolution) in a determined multidimensional space is written into the container. The multidimensional space corresponds for example to the 3D space described in reference to figure 1 or to the 2D space described in reference to figure 2.

In an exemplary embodiment, the method further comprises, when the set of haptic actuator comprises a plurality of haptic actuators, writing, into the container, third data representative of a position of one determined haptic actuator of the set in the determined multidimensional space.

In an exemplary embodiment, the method further comprises writing, into the container, fourth data representative of a distance with respect to the determined haptic actuator, the distance being defined in the determined multidimensional space.

In a supplemental embodiment, the method further comprises writing, into the container, data representative of a haptic animation. The data representative of the haptic animation comprises for example data representative of a starting point of the haptic animation and data representative of an ending point of the haptic animation. The starting point may correspond to a determined haptic actuator of a first haptic device or to a group of haptic actuators of the first haptic device. The data representative of the starting point is advantageously written in the form of the second, third and/or fourth data. In a same way, the ending point may correspond to another determined haptic actuator of the first haptic device (or of a second haptic device different from the first haptic device) or to another group of haptic actuators of the first haptic device (or of the second haptic device). The data representative of the ending point is advantageously written in the form of the second, third and/or fourth data.

In another exemplary embodiment, the method further comprises writing, into the container, data representative of a haptic device type associated with the haptic device, the spatial distribution referring to the haptic device type.

In an additional exemplary embodiment, the method further comprises writing, into the container, sixth data representative of the haptic effect.

**Figure 9** shows a schematic block diagram of steps of a method of parsing, from a received container, data representative of a mapping between a body part of a body model targeted by a haptic effect and a haptic device comprising a set of haptic actuators configured to render the haptic effect on at least a part of the body part, in accordance with at least one exemplary embodiment.

The targeted body part is defined in reference to a body model, for example the body model described with regard to figure 4 or according to any representation of a body model known by the skilled person in the art.

Figure 9 also shows a schematic block diagram of steps of a method of decoding data representative of the mapping, according to a specific and non-limiting embodiment. The reading operation(s) described in reference to the parsing method may be interpreted as decoding operation(s) for the decoding method.

In a first step 91, first data representative of the body part is read from the container.

In a second step 82, second data representative of a spatial distribution of the set of haptic actuators (or representative of a maximal resolution) in a determined multidimensional space is read from the container. The multidimensional space corresponds for example to the 3D space described in reference to figure 1 or to the 2D space described in reference to figure 2.

In an exemplary embodiment, the method further comprises, when the set of haptic actuator comprises a plurality of haptic actuators, reading, from the container, third data representative of a position of one determined haptic actuator of the set in the determined multidimensional space.

In an exemplary embodiment, the method further comprises reading, from the container, fourth data representative of a distance with respect to the determined haptic actuator, the distance being defined in the determined multidimensional space.

In a supplemental embodiment, the method further comprises reading, from the container, data representative of a haptic animation. The data representative of the haptic animation comprises for example data representative of a starting point of the haptic animation and data representative of an ending point of the haptic animation. The starting point may correspond to a determined haptic actuator of a first haptic device or to a group of haptic actuators of the first haptic device. The data representative of the starting point is advantageously comprised in the container under the form of the second, third and/or fourth data. In a same way, the ending point may correspond to another determined haptic actuator of the first haptic device (or of a second haptic device different from the first haptic device) or to another group of haptic actuators of the first haptic device (or of the second haptic device). The data representative of the ending point is advantageously comprised in the container in the form of the second, third and/or fourth data.

In another exemplary embodiment, the method further comprises reading, from the container, data representative of a haptic device type associated with the haptic device, the spatial distribution referring to the haptic device type.

In an additional exemplary embodiment, the method further comprises reading, from the container, sixth data representative of the haptic effect.

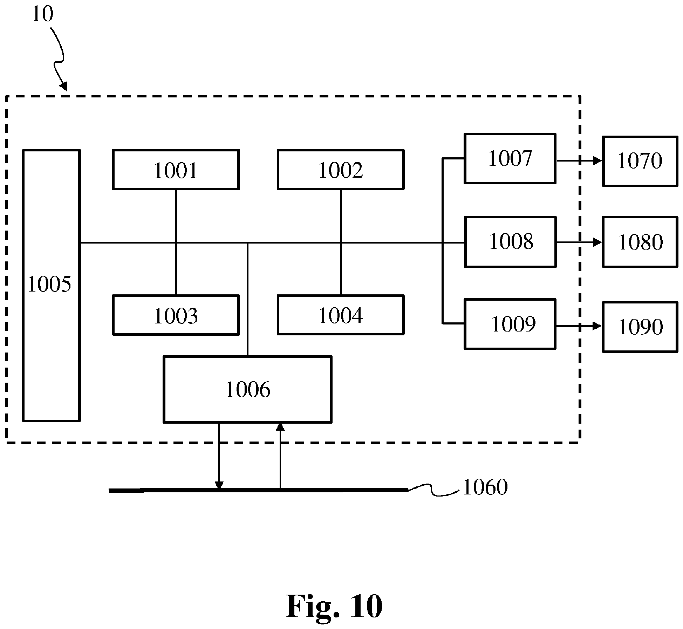

**Figure 10** shows a schematic block diagram illustrating an example of a system in which various aspects and exemplary embodiments are implemented.

System 10 may be embedded as one or more devices including the various components described below. In various embodiments, the system 10 may be configured to implement one or more of the aspects described in the present application.

Examples of equipment that may form all or part of the system 10 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), haptic sensors or actuators, "caves" (system including multiple displays), servers, haptic encoders, haptic decoders, post-processors processing output from a haptic decoder, pre-processors providing input to a haptic encoder, web servers, set-top boxes, wireless (e.g., Bluetooth®) connected wearable haptic devices, game controller, mouse, mousepad, keyboard, palm rest, chairs, desk, XR headset, headphones, bracelet, head and/or lumbar support device or chair, any other device for processing haptic data or haptic signals, or other communication devices. Elements of system 10, singly or in combination, may be embodied in a single integrated circuit (IC), multiple ICs, and/or discrete components. For example, in at least one embodiment, the processing and encoder/decoder elements of system 10 may be distributed across multiple ICs and/or discrete components. In various embodiments, the system 10 may be communicatively coupled to other similar systems, or to other electronic devices, via, for example, a communications bus or through dedicated input and/or output ports.

The system 10 may include at least one processor 1001 configured to execute instructions loaded therein for implementing, for example, the various aspects described in the present application. Processor 1001 may include embedded memory, input output interface, and various other circuitries as known in the art. The system 10 may include at least one memory 1002 (for example a volatile memory device and/or a non-volatile memory device). System 10 may include a storage device 1004, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 1004 may include an internal storage device, an attached storage device, and/or a network accessible storage device, as non-limiting examples.

The system 10 may include an encoder/decoder module 1003 configured, for example, to process data to provide encoded/decoded haptic signal or data, and the encoder/decoder module 1003 may include its own processor and memory. The encoder/decoder module 1003 may represent module(s) that may be included in a device to perform the encoding and/or decoding functions. As is known, a device may include one or both of the encoding and decoding modules. Additionally, encoder/decoder module 1003 may be implemented as a separate element of system 1003 or may be incorporated within processor 1001 as a combination of hardware and software as known to those skilled in the art.

Program code to be loaded onto processor 1001 or encoder/decoder 1003 to perform the various aspects described in the present application may be stored in storage device 1004 and subsequently loaded onto memory 1002 for execution by processor 1001. In accordance with various embodiments, one or more of processor 1001, memory 1002, storage device 1004, and encoder/decoder module 1003 may store one or more of various items during the performance of the processes described in the present application. Such stored items may include, but are not limited to, haptic-related data, encoded/decoded data identifying body part(s) and/or group(s) of body part(s) of a body model, a bitstream, matrices, variables, and intermediate or final results from the processing of equations, formulas, operations, and operational logic.

In several embodiments, memory inside of the processor 1001 and/or the encoder/decoder module 1003 may be used to store instructions and to provide working memory for processing that may be performed during encoding or decoding.

In other embodiments, however, a memory external to the processing device (for example, the processing device may be either the processor 1001 or the encoder/decoder module 1003) may be used for one or more of these functions. The external memory may be the memory 1002 and/or the storage device 1004, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-V.

The input to the elements of system 10 may be provided through various input devices as indicated in block 1005. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 1005 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 10 to other electronic devices across USB and/or HDMI connections. It is to be understood that various aspects of input processing, for example, Reed-Solomon error correction, may be implemented, for example, within a separate input processing IC or within processor 1001 as necessary. Similarly, aspects of USB or HDMI interface processing may be implemented within separate interface ICs or within processor 1001 as necessary. The demodulated, error corrected, and demultiplexed stream may be provided to various processing elements, including, for example, processor 1001, and encoder/decoder 1003 operating in combination with the memory and storage elements to process the data stream as necessary for presentation on an output device.

Various elements of system 10 may be provided within an integrated housing. Within the integrated housing, the various elements may be interconnected and transmit data therebetween using suitable connection arrangement 1005, for example, an internal bus as known in the art, including the I2C bus, wiring, and printed circuit boards.

The system 10 may include communication interface 1006 that enables communication with other devices via communication channel 1060. The communication interface 1006 may include, but is not limited to, a transceiver configured to transmit and to receive data over communication channel 1060. The communication interface 1006 may include, but is not limited to, a modem or network card and the communication channel 1060 may be implemented, for example, within a wired and/or a wireless medium.

Data may be streamed to the system 10, in various embodiments, using a Wi-Fi network such as IEEE 802.11. The Wi-Fi signal of these embodiments may be received over the communications channel 1060 and the communications interface 1006 which are adapted for Wi-Fi communications. The communications channel 1060 of these embodiments may be typically connected to an access point or router that provides access to outside networks including the Internet for allowing streaming applications and other over-the-top communications.

Other embodiments may provide streamed data to the system 10 using a set-top box that delivers the data over the HDMI connection of the input block 1005.

Still other embodiments may provide streamed data to the system 10 using the RF connection of the input block 1005.

The streamed data may be used as a way for signaling information used by the system 10. The signaling information may comprise the data encoded in a container such as a binary stream or a haptic effect file for example.

It is to be appreciated that signaling may be accomplished in a variety of ways. For example, one or more syntax elements, flags, and so forth may be used to signal information to a corresponding decoder in various embodiments.

The system 10 may provide an output signal to various output devices, including a display 1070, speakers 1080, and other peripheral devices 1090 like haptic devices/actuators.

In various embodiments, control signals may be communicated between the system 10 and the display 1070, speakers 1080, or other peripheral devices 1090 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to system 10 via dedicated connections through respective interfaces 1007, 1008, and 1009.

Alternatively, the output devices may be connected to system 10 using the communications channel 1060 via the communications interface 1006. The display 1070, speakers 1080 and/or actuators 1090 may be integrated in a single unit with the other components of system 10 in an electronic device such as, for example, a television.

In various embodiments, the display interface 1007 may include a display driver, such as, for example, a timing controller (T Con) chip.

The display 1070 speakers 1080 and/or actuators 1090 may alternatively be separate from one or more of the other components, for example, if the RF portion of input 1005 is part of a separate set-top box. In various embodiments in which the display 1070, speakers 1080 and/or actuators 1090 may be external components, the output signal may be provided via dedicated output connections, including, for example, HDMI ports, USB ports, or COMP outputs.

In **Figures 1 to 10,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic encoders, video and/or haptic decoders, post-processors processing output from a video decoder, pre-processors providing input to a video encoder, web servers, set-top boxes, wireless connected wearable haptic devices, e.g., Bluetooth® connected wearable haptic devices, game controller, mouse, mousepad, keyboard, palm rest, chairs, desk, XR headset, headphones, bracelet, head and/or lumbar support device or chair, and any other device for processing haptic data or signals representative of one or more haptic feedback or effect, or other communication devices. As should be clear, the equipment may be mobile.

Computer software may be implemented by the processor 91 or by hardware, or by a combination of hardware and software. As a non-limiting example, the embodiments may be also implemented by one or more integrated circuits. The memory 1002 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1001 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received haptic signal (including possibly a received bitstream which encodes one or more haptic signals) in order to produce a final output suitable for rendering haptic effects or for further processing in the reconstructed haptic feedback or effect. In various embodiments, such processes include one or more of the processes typically performed by a decoder. In various embodiments, such processes also, or alternatively, include processes performed by a decoder of various implementations described in this application, for example,

Various implementations involve encoding. In an analogous way to the above discussion about "decoding", "encoding" as used in this application may encompass all or part of the processes performed, for example, on an input haptic signal in order to produce an encoded bitstream. In various embodiments, such processes include one or more of the processes typically performed by an encoder. In various embodiments, such processes also, or alternatively, include processes performed by an encoder of various implementations described in this application.

Additionally, this application may refer to "obtaining" various pieces of information. Obtaining the information may include one or more of, for example, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

Also, as used herein, the word "signal" refers to, among other things, indicating something to a corresponding decoder. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of signaling, into a container (502), a mapping between a body part (1) of a body model targeted by a haptic effect and a haptic device comprising a set of haptic actuators (100 to 104, 110 to 114, 120 to 124, 130 to 134) configured to render said haptic effect on at least a part of said body part (1), the method comprising:

   - writing (81), into said container (502), first data representative of said body part (1);
   - writing (82), into said container (502), second data representative of a spatial distribution of the set of haptic actuators (100 to 104, 110 to 114, 120 to 124, 130 to 134) over said body part (1) in a determined multidimensional space.

2. The method according to claim 1, further comprising, when said set of haptic actuators (100 to 104, 110 to 114, 120 to 124, 130 to 134) comprises a plurality of haptic actuators, writing, into said container (502), third data representative of a position of one determined haptic actuator of said set over said body part (1) in said determined multidimensional space.

3. The method according to claim 2, further comprising writing, into said container (502), fourth data representative of a distance with respect to said determined haptic actuator, said distance being defined in said determined multidimensional space, said distance identifying a group of haptic actuators of said plurality to render said haptic effect, said group of haptic actuators comprising said determined haptic actuator.

4. The method according to one of claims 2 to 3, wherein said determined haptic actuator corresponds to a starting point of a haptic animation, the method further comprising writing, into said container (502), fifth data representative of another determined haptic actuator corresponding to an ending point of said haptic animation.

5. The method according to one of claims 1 to 4, wherein said determined multidimensional space corresponds to:

   - a cartesian three-dimensional space, wherein said first data comprises a first information representative of a number of haptic actuators according to a first dimension of said three-dimensional space, a second information representative of a number of haptic actuators according to a second dimension of said three-dimensional space, and a third information representative of a number of haptic actuators according to a third dimension of said three-dimensional space, a maximum number of haptic actuators according to the third information being equal to 2;

- a two-dimensional space, wherein said first data comprises a first information representative of a number of angular sectors (20 to 27) according to a first dimension of said two-dimensional space and a second information representative of a number of haptic actuators according to a second dimension of said two-dimensional space for each of said angular sectors (20 to 27).

6. The method according to one of claims 1 to 5, further comprising writing into said container (502) sixth data representative of said haptic effect.

7. A method of parsing, from a container (502), data representative of a mapping between a body part (1) of a body model targeted by a haptic effect and a haptic device comprising a set of haptic actuators (100 to 104, 110 to 114, 120 to 124, 130 to 134) configured to render said haptic effect on at least a part of said body part, the method comprising:

   - reading (91), from said container (502), first data representative of said body part;
   - reading (92), from said container (502), second data representative of a spatial distribution of the set of haptic actuators (100 to 104, 110 to 114, 120 to 124, 130 to 134) over said body part (1) in a determined multidimensional space.

8. The method according to claim 7, further comprising, when said set of haptic actuators (100 to 104, 110 to 114, 120 to 124, 130 to 134) comprises a plurality of haptic actuators, reading, from said container, third data representative of a position of one determined haptic actuator of said set over said body part (1) in said determined multidimensional space.

9. The method according to claim 8, further comprising reading, from said container (502), fourth data representative of a distance with respect to said determined haptic actuator, said distance being defined in said determined multidimensional space, said distance identifying a group of haptic actuators of said plurality to render said haptic effect, said group of haptic actuators comprising said determined haptic actuator.

10. The method according to one of claims 8 to 9, wherein said determined haptic actuator corresponds to a starting point of a haptic animation, the method further comprising reading, from said container, fifth data representative of another determined haptic actuator corresponding to an ending point of said haptic animation.

11. The method according to claim 9, further comprising determining data representative of a position of one determined haptic actuator of a set of haptic actuators of another haptic device and data representative of a distance with respect to said determined haptic actuator of the another haptic device from respectively said third and fourth data according to said second data and data representative of a spatial distribution of said set of haptic actuators of the another haptic device.

12. The method according to one of claims 7 to 11, wherein said determined multidimensional space corresponds to:

   - a cartesian three-dimensional space, wherein said first data comprises a first information representative of a number of haptic actuators according to a first dimension of said three-dimensional space, a second information representative of a number of haptic actuators according to a second dimension of said three-dimensional space, and a third information representative of a number of haptic actuators according to a third dimension of said three-dimensional space, a maximum number of haptic actuators according to the third information being equal to 2;
   - a two-dimensional space, wherein said first data comprises a first information representative of a number of angular sectors (20 to 27) according to a first dimension of said two-dimensional space and a second information representative of a number of haptic actuators according to a second dimension of said two-dimensional space for each of said angular sectors (20 to 27).

13. The method according to one of claims 7 to 12, further comprising reading, from said container (502), sixth data representative of said haptic effect.

14. An apparatus (10) of signaling, into a container (502), a mapping between a body part of a body model targeted by a haptic effect and a haptic device comprising a set of haptic actuators, wherein said apparatus (10) comprising a memory (1002, 1004) associated with at least a processor (1001) configured to implement the method according to any one of claims 1 to 6.

15. An apparatus (10) of parsing, from a container (502), data representative of a mapping between a body part of a body model targeted by a haptic effect and a haptic device comprising a set of haptic actuators, wherein said apparatus (10) comprising a memory (1002, 1004) associated with at least a processor (1001) configured to implement the method according to any one of claims 7 to 13.

**Patentansprüche**

1. Verfahren zum Signalisieren, in einen Container (502), eine Zuordnung zwischen einem Körperteil (1) eines Körpermodells, auf dem ein haptischer Effekt abzielt, und einer haptischen Vorrichtung, die einen Satz von haptischen Aktuatoren (100 bis 104, 110 bis 114, 120 bis 124, 130 bis 134) umfasst, die so konfiguriert sind, dass sie den haptischen Effekt auf mindestens einen Teil des Körperteils (1) ausüben, wobei das Verfahren umfasst:

   - Schreiben (81), in den Container (502), ersten Daten, die das Körperteil (1) darstellen;
   - Schreiben (82), in den Container (502), zweiten Daten, die eine räumliche Verteilung des Satzes von haptischen Aktuatoren (100 bis 104, 110 bis 114, 120 bis 124, 130 bis 134) über dem Körperteil (1) in einem bestimmten mehrdimensionalen Raum darstellen.

2. Verfahren nach Anspruch 1, das ferner umfasst, dass, wenn der Satz von haptischen Aktuatoren (100 bis 104, 110 bis 114, 120 bis 124, 130 bis 134) eine Vielzahl von haptischen Aktuatoren umfasst, Schreiben, in den Container (502), dritten Daten, die eine Position eines bestimmten haptischen Aktuators des Satzes über dem Körperteil (1) in dem bestimmten mehrdimensionalen Raum darstellen.

3. Verfahren nach Anspruch 2, das ferner umfasst Schreiben, in den Container (502), vierten Daten, die einen Abstand in Bezug auf den bestimmten haptischen Aktuator darstellen, wobei der Abstand in dem bestimmten mehrdimensionalen Raum definiert ist und eine Gruppe von haptischen Aktuatoren der Vielzahl identifiziert, um den haptischen Effekt zu erzeugen, wobei die Gruppe von haptischen Aktuatoren den bestimmten haptischen Aktuator umfasst.

4. Verfahren nach einem der Ansprüche 2 bis 3, wobei der bestimmte haptische Aktuator einem Startpunkt einer haptischen Animation entspricht, wobei das Verfahren ferner das Schreiben von fünften Daten in den Container (502) umfasst, die einen weiteren bestimmten haptischen Aktuator repräsentieren, der einem Endpunkt der haptischen Animation entspricht.

5. Verfahren nach einem der Ansprüche 1 bis 4, wobei der bestimmte mehrdimensionale Raum entspricht:

   - einem kartesischen dreidimensionalen Raum, wobei die ersten Daten erste Informationen umfassen, die eine Anzahl von haptischen Aktuatoren gemäß einer ersten Dimension des dreidimensionalen Raums repräsentieren, einer zweiten Information, die eine Anzahl von haptischen Aktuatoren gemäß einer zweiten Dimension des dreidimensionalen Raums repräsentiert, und einer dritten Information, die eine Anzahl von haptischen Aktuatoren gemäß einer dritten Dimension des dreidimensionalen Raums repräsentiert, wobei eine maximale Anzahl von haptischen Aktuatoren gemäß der dritten Information gleich 2 ist;
   - einen zweidimensionalen Raum, wobei die ersten Daten erste Informationen umfassen, die eine Anzahl von Winkelbereichen (20 bis 27) gemäß einer ersten Dimension des zweidimensionalen Raums repräsentieren, und zweite Informationen, die eine Anzahl von haptischen Aktuatoren gemäß einer zweiten Dimension des zweidimensionalen Raums für jeden der Winkelbereiche (20 bis 27) repräsentieren.

6. Verfahren nach einem der Ansprüche 1 bis 5, das ferner das Schreiben von sechsten Daten, die den haptischen Effekt repräsentieren, in den Container (502) umfasst.

7. Verfahren zum Parsen von Daten aus einem Container (502), die eine Zuordnung zwischen einem Körperteil (1) eines Körpermodells, auf dem ein haptischer Effekt abzielt, und einer haptischen Vorrichtung darstellen, die einen Satz von haptischen Aktuatoren (100 bis 104, 110 bis 114, 120 bis 124, 130 bis 134) umfasst, die so konfiguriert sind, dass sie den haptischen Effekt auf mindestens einen Teil des Körperteils ausüben, wobei das Verfahren umfasst:

   - Lesen (91) ersten Daten aus dem Container (502), die das Körperteil darstellen;
   - Lesen (92) zweiten Daten aus dem Container (502), die eine räumliche Verteilung des Satzes von haptischen Aktuatoren (100 bis 104, 110 bis 114, 120 bis 124, 130 bis 134) über dem Körperteil (1) in einem bestimmten mehrdimensionalen Raum darstellen.

8. Verfahren nach Anspruch 7, das ferner umfasst, dass, wenn der Satz von haptischen Aktuatoren (100 bis 104, 110 bis 114, 120 bis 124, 130 bis 134) eine Vielzahl von haptischen Aktuatoren umfasst, das Auslesen dritter Daten aus dem Container (502), die eine Position eines bestimmten haptischen Aktuators des Satzes über dem Körperteil (1) in dem bestimmten mehrdimensionalen Raum darstellen.

9. Verfahren nach Anspruch 8, das ferner umfasst das Lesen von vierten Daten aus dem Container (502), die einen Abstand in Bezug auf den bestimmten haptischen Aktuator darstellen, wobei der Abstand in dem bestimmten mehrdimensionalen Raum definiert ist und eine Gruppe von haptischen Aktuatoren der Vielzahl identifiziert, um den haptischen Effekt zu erzeugen, wobei die Gruppe von haptischen Aktuatoren den bestimmten haptischen Aktuator umfasst.

10. Verfahren nach einem der Ansprüche 8 bis 9, wobei der bestimmte haptische Aktuator einem Startpunkt einer haptischen Animation entspricht, wobei das Verfahren ferner das Auslesen von fünften Daten aus dem Container umfasst, die einen weiteren bestimmten haptischen Aktuator repräsentieren, der einem Endpunkt der haptischen Animation entspricht.

11. Verfahren nach Anspruch 9, das ferner das Bestimmen von Daten umfasst, die eine Position eines bestimmten haptischen Aktuators eines Satzes von haptischen Aktuatoren einer anderen haptischen Vorrichtung repräsentieren, sowie von Daten, die einen Abstand in Bezug auf den bestimmten haptischen Aktuator der anderen haptischen Vorrichtung von den dritten bzw. vierten Daten gemäß den zweiten Daten und Daten, die eine räumliche Verteilung des Satzes von haptischen Aktuatoren der anderen haptischen Vorrichtung repräsentieren, darstellen.

12. Verfahren nach einem der Ansprüche 7 bis 11, wobei der bestimmte mehrdimensionale Raum entspricht:

- einem kartesischen dreidimensionalen Raum, wobei die ersten Daten erste Informationen umfassen, die eine Anzahl von haptischen Aktuatoren gemäß einer ersten Dimension des dreidimensionalen Raums repräsentieren, einer zweiten Information, die eine Anzahl von haptischen Aktuatoren gemäß einer zweiten Dimension des dreidimensionalen Raums repräsentiert, und einer dritten Information, die eine Anzahl von haptischen Aktuatoren gemäß einer dritten Dimension des dreidimensionalen Raums repräsentiert, wobei eine maximale Anzahl von haptischen Aktuatoren gemäß der dritten Information gleich 2 ist;
- einen zweidimensionalen Raum, wobei die ersten Daten erste Informationen umfassen, die eine Anzahl von Winkelbereichen (20 bis 27) gemäß einer ersten Dimension des zweidimensionalen Raums repräsentieren, und zweite Informationen, die eine Anzahl von haptischen Aktuatoren gemäß einer zweiten Dimension des zweidimensionalen Raums für jeden der Winkelbereiche (20 bis 27) repräsentieren.

13. Verfahren nach einem der Ansprüche 7 bis 12, das ferner das Lesen von sechsten Daten, die den haptischen Effekt repräsentieren, aus dem Container (502) umfasst.

14. Vorrichtung (10) zum Signalisieren, in einen Container (502), eine Zuordnung zwischen einem Körperteil eines Körpermodells, auf das ein haptischer Effekt abzielt, und einer haptischen Vorrichtung, die einen Satz haptischer Aktuatoren umfasst, wobei die Vorrichtung (10) einen Speicher (1002, 1004) umfasst, der mindestens einem Prozessor (1001) zugeordnet ist, der so konfiguriert ist, dass er das Verfahren gemäß einem der Ansprüche 1 bis 6 implementiert.

15. Vorrichtung (10) zum Parsen von Daten aus einem Container (502), die eine Zuordnung zwischen einem Körperteil eines Körpermodells, auf das ein haptischer Effekt abzielt, und einem haptischen Gerät, das einen Satz haptischer Aktuatoren umfasst, darstellen, wobei die Vorrichtung (10) einen Speicher (1002, 1004) umfasst, der mindestens einem Prozessor (1001) zugeordnet ist, der so konfiguriert ist, dass er das Verfahren gemäß einem der Ansprüche 7 bis 13 implementiert.

**Revendications**

1. Procédé de signalisation, dans un conteneur (502), d'une correspondance entre une partie du corps (1) d'un modèle corporel ciblée par un effet haptique et un dispositif haptique comprenant un ensemble d'actionneurs haptiques (100 à 104, 110 à 114, 120 à 124, 130 à 134) configurés pour rendre ledit effet haptique sur au moins une partie de ladite partie du corps (1), le procédé comprenant :

- écriture (81), dans ledit conteneur (502), de premières données représentatives de ladite partie du corps (1) ;
- écriture (82), dans ledit conteneur (502), de deuxièmes données représentatives d'une distribution spatiale de l'ensemble d'actionneurs haptiques (100 à 104, 110 à 114, 120 à 124, 130 à 134) sur ladite partie du corps (1) dans un espace multidimensionnel déterminé.

2. Procédé selon la revendication 1, comprenant en outre, lorsque ledit ensemble d'actionneurs haptiques (100 à 104, 110 à 114, 120 à 124, 130 à 134) comprend une pluralité d'actionneurs haptiques, l'écriture, dans ledit conteneur (502), de troisièmes données représentatives d'une position d'un actionneur haptique déterminé dudit ensemble sur ladite partie du corps (1) dans ledit espace multidimensionnel déterminé.

3. Procédé selon la revendication 2, comprenant en outre l'écriture, dans ledit conteneur (502), de quatrièmes données représentatives d'une distance par rapport audit actionneur haptique déterminé, ladite distance étant définie dans ledit espace multidimensionnel déterminé, ladite distance identifiant un groupe d'actionneurs haptiques de ladite pluralité pour rendre ledit effet haptique, ledit groupe d'actionneurs haptiques comprenant ledit actionneur haptique déterminé.

4. Procédé selon l'une des revendications 2 à 3, dans lequel ledit actionneur haptique déterminé correspond à un point de départ d'une animation haptique, le procédé comprenant en outre l'écriture, dans ledit conteneur (502), de cinquièmes données représentatives d'un autre actionneur haptique déterminé correspondant à un point final de ladite animation haptique.

5. Procédé selon l'une des revendications 1 à 4, dans lequel ledit espace multidimensionnel déterminé correspond à :

- un espace tridimensionnel cartésien, dans lequel lesdites premières données comprennent une première information représentative d'un nombre d'actionneurs haptiques selon une première dimension dudit espace tridimensionnel, une deuxième information représentative d'un nombre d'actionneurs haptiques selon une deuxième dimension dudit espace tridimensionnel, et une troisième information représentative d'un nombre d'actionneurs haptiques selon une troisième dimension dudit espace tridimensionnel, un nombre maximal d'actionneurs haptiques selon la troisième information étant égal à 2 ;
- un espace bidimensionnel, dans lequel lesdites premières données comprennent une première information représentative d'un nombre de secteurs angulaires (20 à 27) selon une première dimension dudit espace bidimensionnel et une deuxième information représentative d'un nombre d'actionneurs haptiques selon une deuxième dimension dudit espace bidimensionnel pour chacun desdits secteurs angulaires (20 à 27).

6. Procédé selon l'une des revendications 1 à 5, comprenant en outre l'écriture dans ledit conteneur (502) de sixièmes données représentatives dudit effet haptique.

7. Procédé d'analyse, à partir d'un conteneur (502), de données représentatives d'une correspondance entre une partie du corps (1) d'un modèle corporel ciblé par un effet haptique et un dispositif haptique comprenant un ensemble d'actionneurs haptiques (100 à 104, 110 à 114, 120 à 124, 130 à 134) configurés pour rendre ledit effet haptique sur au moins une partie de ladite partie du corps, le procédé comprenant :

- lecture (91), à partir dudit conteneur (502), de premières données représentatives de ladite partie du corps ;
- lecture (92), à partir dudit conteneur (502), de deuxièmes données représentatives d'une distribution spatiale de l'ensemble d'actionneurs haptiques (100 à 104, 110 à 114, 120 à 124, 130 à 134) sur ladite partie du corps (1) dans un espace multidimensionnel déterminé.

8. Procédé selon la revendication 7, comprenant en outre, lorsque ledit ensemble d'actionneurs haptiques (100 à 104, 110 à 114, 120 à 124, 130 à 134) comprend une pluralité d'actionneurs haptiques, la lecture, à partir dudit conteneur, de troisièmes données représentatives d'une position d'un actionneur haptique déterminé dudit ensemble sur ladite partie du corps (1) dans ledit espace multidimensionnel déterminé.

9. Procédé selon la revendication 8, comprenant en outre la lecture, à partir dudit conteneur (502), de quatrièmes données représentatives d'une distance par rapport audit actionneur haptique déterminé, ladite distance étant définie dans ledit espace multidimensionnel déterminé, ladite distance identifiant un groupe d'actionneurs haptiques de ladite pluralité pour rendre ledit effet haptique, ledit groupe d'actionneurs haptiques comprenant ledit actionneur haptique déterminé.

**10.** Procédé selon l'une des revendications 8 à 9, dans lequel ledit actionneur haptique déterminé correspond à un point de départ d'une animation haptique, le procédé comprenant en outre la lecture, à partir dudit conteneur, de cinquièmes données représentatives d'un autre actionneur haptique déterminé correspondant à un point final de ladite animation haptique.

**11.** Le procédé selon la revendication 9, comprenant en outre la détermination de données représentatives d'une position d'un actionneur haptique déterminé d'un ensemble d'actionneurs haptiques d'un autre dispositif haptique et de données représentatives d'une distance par rapport audit actionneur haptique déterminé de l'autre dispositif haptique à partir respectivement desdites troisièmes et quatrièmes données en fonction desdites deuxièmes données et de données représentatives d'une distribution spatiale dudit ensemble d'actionneurs haptiques de l'autre dispositif haptique.

**12.** Procédé selon l'une des revendications 7 à 11, dans lequel ledit espace multidimensionnel déterminé correspond à :

- un espace tridimensionnel cartésien, dans lequel lesdites premières données comprennent une première information représentative d'un nombre d'actionneurs haptiques selon une première dimension dudit espace tridimensionnel, une deuxième information représentative d'un nombre d'actionneurs haptiques selon une deuxième dimension dudit espace tridimensionnel, et une troisième information représentative d'un nombre d'actionneurs haptiques selon une troisième dimension dudit espace tridimensionnel, un nombre maximal d'actionneurs haptiques selon la troisième information étant égal à 2 ;
- un espace bidimensionnel, dans lequel lesdites premières données comprennent une première information représentative d'un nombre de secteurs angulaires (20 à 27) selon une première dimension dudit espace bidimensionnel et une deuxième information représentative d'un nombre d'actionneurs haptiques selon une deuxième dimension dudit espace bidimensionnel pour chacun desdits secteurs angulaires (20 à 27).

**13.** Procédé selon l'une des revendications 7 à 12, comprenant en outre la lecture, à partir dudit conteneur (502), de sixièmes données représentatives dudit effet haptique.

**14.** Dispositif (10) de signalisation, dans un conteneur (502), d'une correspondance entre une partie du corps d'un modèle corporel ciblé par un effet haptique et un dispositif haptique comprenant un ensemble d'actionneurs haptiques, dans lequel ledit dispositif (10) comprend une mémoire (1002, 1004) associée à au moins un processeur (1001) configuré pour mettre en œuvre le procédé selon l'une quelconque des revendications 1 à 6.

**15.** Dispositif (10) d'analyse, à partir d'un conteneur (502), de données représentatives d'une correspondance entre une partie du corps d'un modèle corporel ciblé par un effet haptique et un dispositif haptique comprenant un ensemble d'actionneurs haptiques, dans lequel ledit dispositif (10) comprend une mémoire (1002, 1004) associée à au moins un processeur (1001) configuré pour mettre en œuvre le procédé selon l'une quelconque des revendications 7 à 13.

**Fig. 1**

**Fig. 2**

**Fig. 3**

**Fig. 4**

Haptics data → [51] → container → [52] → Haptics data

501

502

503

**Fig. 5**

[61] ↔ (60) ↔ [62]

**Fig. 6**

7

| H | Payload |

71

72

**Fig. 7**

```
        ┌─────────────────────────┐
        │                         │
        │           81            │
        │                         │
        └─────────────────────────┘

        ┌─────────────────────────┐
        │                         │
        │           82            │
        │                         │
        └─────────────────────────┘
```

# Fig. 8

```
        ┌─────────────────────────┐
        │                         │
        │           91            │
        │                         │
        └─────────────────────────┘

        ┌─────────────────────────┐
        │                         │
        │           92            │
        │                         │
        └─────────────────────────┘
```

# Fig. 9

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022053439 A1
- US 2019139020 A1

- US 2016012690 A1

**Non-patent literature cited in the description**

- **NICOLAS MOLLET et al.** *A workflow for next generation immersive content*